# EUROPÄISCHE PATENTSCHRIFT

(11) **EP 3 939 032 B1**
(45) Veröffentlichungstag und Bekanntmachung des Hinweises auf die Patenterteilung: **11.09.2024**
(21) Anmeldenummer: 20708461.7
(22) Anmeldetag: 27.02.2020
(51) Int. Cl.: G10K 11/16, F16K 15/18, F16K 15/20, F16K 47/08

(54) **SCHALLDÄMPFER**
SOUND ATTENUATOR
AMORTISSEUR DE BRUIT

(30) Priorität: 12.03.2019 DE 102019106205
(43) Veröffentlichungstag der Anmeldung: 19.01.2022
(73) Patentinhaber: Woineck, Michael, 83624 Otterfing (DE)
(72) Erfinder: Woineck, Michael, 83624 Otterfing (DE)
(74) Vertreter: Beckord & Niedlich Patentanwälte PartG mbB
(86) Internationale Anmeldenummer: PCT/EP2020/055212
(87) Internationale Veröffentlichungsnummer: WO 2020/182486

(56) Entgegenhaltungen:
- CN-A- 109 419 214
- DE-A1- 19 825 151
- DE-A1- 2 523 289
- DE-U1- 202004 018 404

## Beschreibung

Die Erfindung betrifft einen Schalldämpfer zum geräuschreduzierten Ablassen eines gasförmigen Mediums aus einem Ventil eines unter Überdruck stehenden aufblasbaren Wassersportgeräts, vorzugsweise eines aufblasbaren (engl. inflatable) Stand Up Paddle Boards (iSUP Board), die Verwendung eines Schalldämpfers zum schallgedämpften Ablassen eines gasförmigen Mediums aus einem Ventil eines unter Überdruck stehenden aufblasbaren Wassersportgeräts, sowie ein iSUP Board mit einem Schalldämpfer.

Das Stand Up Paddling, auch Stehpaddeln genannt, ist eine immer beliebter werdende Wassersportart, bei der Sportler und/oder Erholungssuchende aufrecht auf einer Art Surfbrett stehen und mit einem Stechpaddel paddeln. Inzwischen ist das Stand Up Paddling zu einer regelrechten Trendsportart geworden. Auch finden Stand Up Paddle Boards ein immer größeres Anwendungsgebiet, so werden Stand Up Paddle Boards zusätzlich zur ursprünglichen Verwendung immer öfter auch zur Ausübung von Gymnastikübungen und zur Entspannung (SUP Yoga) genutzt.

Grundsätzlich existieren zwei Arten von Stand Up Paddle Boards: Feste Boards, sogenannte Hardboards und aufblasbare Stand Up Paddle Boards (iSUP Boards), dabei ist ein klarer Vorteil der iSUP Boards, dass sie wesentlich leichter zu Transportieren und zu Lagern sind. Erst nachdem es möglich geworden ist, iSUP Boards mit einer ausreichenden Steifigkeit zu bauen, hat das Stand Up Paddling seinen Durchbruch als Massenphänomen erzielt.

Aufblasbare SUP Boards werden vor der jeweiligen Benutzung mit Luft befüllt. Um das iSUP Board möglichst formstabil und stromlinienförmig auszubilden, wodurch unter Anderem eine stabile Lage auf der Wasseroberfläche erreicht wird, werden die iSUP Boards mit einem hohen Innendruck von einem Überdruck von bis zu 1,5 bar mit Luft befüllt. Aufblasbare SUP Boards sind derzeit nahezu ausnahmslos mit Bootventilen vom Halkey-Roberts-Typ^{®} (HR-Ventile^{®}) ausgestattet. Das Ventil dient zum Aufblasen des iSUP Boards, beziehungsweise zum Ablassen des in dem iSUP Board befindlichen Gases, üblicherweise Luft. HR-Ventile^{®} werden auch für Schlauchboote, aufblasbare Kajaks etc. verwendet. Der Aufbau solcher Ventile ist aus der Patentschrift US 4,478,587 bekannt.

Nach der Verwendung des iSUP Boards kann die Luft zum Transport bzw. zur platzsparenden Lagerung der iSUP Boards wieder abgelassen werden. Da die iSUP-Boards - wie oben bereits erwähnt - mit einem sehr hohen Luftinnendruck befüllt sind, entweicht hierbei die Luft schlagartig mit einem Schalldruck von bis zu 110 dB (gemessen in einem Abstand von ca. 80 cm vom Ventil). Dieser Geräuschpegel hält dann über einen Zeitraum von ca. 30 Sekunden - je nach Fassungsvermögen im Innenraum des iSUP Boards für das gasförmige Medium - an, was zu einer gewaltigen Lärmbelästigung für den Nutzer des iSUP Boards führt, der sich in unmittelbarer Nähe zu dem Ventil befindet, aus welchem die Luft durch manuelle Steuerung abgelassen wird. Aber auch Menschen und Tiere in der Umgebung sind durch das Ablassen von Luft aus einem iSUP Board einem immensen Stressfaktor ausgesetzt. So sind 110 dB beispielsweise mit dem Schalldruck vergleichbar, den ein in Betrieb befindlicher Presslufthammer verursacht.

Aufblasbare Stand Up Paddling Boards werden oft auf Gewässern in Naherholungsund/oder Naturschutzgebieten eingesetzt. Die extrem hohe Lärmbelästigung beim Ablassen der Luft aus den iSUP Boards ist aber gerade in solchen Gebieten für erholungsuchende Menschen ein erhebliches Problem. Auch Tiere und vor Allem bedrohte Tierarten, die ja gerade in Naturschutzgebieten geschützt werden sollten, wie etwa unter Naturschutz stehende und seltene Wasservögel, können von einer zu hohen Lärmbelästigung gestört werden und im schlimmsten Fall sogar ihr Nest aufgeben.

Zusätzlich sind viele Nutzer von iSUP Boards naturverbunden und achtsam, womit es ja auch gerade im Interesse der iSUP Board Nutzer liegt, den "ökologischen Fußabdruck" möglichst gering zu halten, was im Umkehrschluss auch bedeutet, in Naherholungsund/oder Naturschutzgebieten das Ökosystem möglichst wenig - auch nicht durch Lärmbelästigung - zu belasten und aus dem Gleichgewicht zu bringen.

DE 25 23 289 A1 beschreibt einen Durchflussschalldämpfer für durchflussangetriebene Maschinen wie z.B. Maschinen, die mit Luft, Dampf oder Verbrennungsprodukten betrieben werden.

DE 20 2004 018 404 U1 beschreibt eine Vorrichtung zum Reduzieren des Geräusches, das in Kraftfahrzeugen mit Abgas-Schalldämpfer beim Abblasen von unter Druck stehenden Gasen entsteht.

DE 198 25 151 A1 beschreibt einen Schalldämpfer für Pneumatikventile, wie sie für die Maschinensteuerung eingesetzt werden.

Es ist daher Aufgabe der vorliegenden Erfindung, eine Vorrichtung bereit zu stellen, mit der die Lärmbelästigung beim Ablassen der Luft aus iSUP Boards oder vergleichbaren, unter Überdruck stehenden aufblasbaren Wassersportgeräten, verringert wird.

Diese Aufgabe wird durch einen Schalldämpfer gemäß Patentanspruch 1, ein Verfahren zum geräuschreduzierten Ablassen eines gasförmigen Mediums gemäß Patentanspruch 11, eine Verwendung eines Schalldämpfers gemäß Patentanspruch 12, sowie ein Set mit zumindest einem Wassersportgerät und einem Schalldämpfer gemäß Patentanspruch 13 gelöst.

Ein erfindungsgemäßer Schalldämpfer ist ausgebildet, ein gasförmiges Medium, insbesondere Luft, aus einem Ventil eines unter Überdruck stehenden aufblasbaren Wassersportgeräts geräuschreduziert abzulassen.

Bei dem Wassersportgerät handelt es sich vorzugsweise um ein aufblasbares Stand Up Paddle Board (im Folgenden auch kurz "iSUP Board" genannt). Ein iSUP Board weist wie oben erwähnt ein Ventil auf, durch welches ein Innenraum des iSUP Board mit einem gasförmigen Medium befüllbar ist. Der Schalldämpfer kann aber auch zum geräuschreduzierten Ablassen eines gasförmigen Mediums aus anderen unter Überdruck stehenden aufblasbaren Wassersportgeräten genutzt werden, wie z.B. Schlauchboote, aufblasbare Kajaks etc. oder bestimmte unter Überdruck stehende Kammern von solchen Wassersportgeräten, beispielsweise der Boden von IRBs (inflatable rescue boats), sofern diese ein entsprechendes Ventil aufweisen, insbesondere natürlich dann, wenn diese Wassersportgeräte oder Kammern mit einem gasförmigen Medium mit einen so hohen Überdruck befüllt werden, dass das Ablassen des gasförmigen Mediums aus dem Ventil des Wassersportgeräts zu einer Geräuschbelästigung führt.

Unter "unter Überdruck stehenden aufblasbaren Wassersportgeräten" werden Wassersportgeräte verstanden, bei denen ein Innenraum zumindest teilweise mit einem gasförmigen Medium gefüllt ist, wobei der Druck des gasförmigen Mediums in dem Wassersportgerät zumindest um ein signifikantes Maß größer als der umgebende Luftdruck ist.

Geräuschreduziert bedeutet im Rahmen der Erfindung, dass der beim Ablassen des gasförmigen Mediums aus dem unter Überdruck stehenden Wassersportgerät entstehende Schalldruck durch die Verwendung des Schalldämpfers gesenkt wird, im Vergleich zu dem Schalldruck, der entsteht, wenn das gasförmige Medium ohne Verwendung des Schalldämpfers aus dem aufblasbaren Wassersportgerät abgelassen wird.

Durch den erfindungsgemäßen Schalldämpfer, bzw. durch eine erfindungsgemäße Verwendung eines Schalldämpfers zum schallgedämpften Ablassen eines gasförmigen Mediums aus einem unter Überdruck stehenden aufblasbaren Wassersportgerät, kann erreicht werden, dass die Belastung durch das sehr laute Geräusch, das sonst beim Ablassen das gasförmigen Mediums bzw. der Luft aus dem Wassersportgerät entsteht, deutlich verringert wird. Dies ist insbesondere dann wichtig, wenn die Luft aus dem Wassersportgerät bzw. des iSUP-Boards in Naherholungs- oder Naturschutzgebieten abgelassen wird. Für erholungsuchende Menschen, sowie für das umgebende Ökosystem, ist der Schalldämpfer somit von unschätzbarem Wert.

Ein erfindungsgemäßes Set umfasst zumindest ein Wassersportgerät, vorzugsweise ein iSUP Board, sowie einen solchen Schalldämpfer, welcher an das Wassersportgerät, insbesondere iSUP Board, angepasst ist, um ein gasförmiges Medium geräuschreduziert aus dem Ventil des iSUP Boards abzulassen.

Der Schalldämpfer ist erfindungsgemäß ausgebildet, um mit seiner Hilfe das Ventil des Wassersportgeräts, insbesondere iSUP Boards, zu öffnen und dabei ein sich unter einem Überdruck befindliches gasförmiges Medium geräuschreduziert aus einem Innenraum des Wassersportgeräts, insbesondere iSUP Boards, abzulassen. Bevorzugte Möglichkeiten der Öffnung des Ventils mittels des Schalldämpfers bzw. mittels eines Mechanismus des Schalldämpfers, werden später noch erläutert.

Bei einem erfindungsgemäßen Verfahren zum geräuschreduzierten Ablassen eines gasförmigen Mediums aus einem unter Überdruck stehenden aufblasbaren Wassersportgerät wird ein Schalldämpfer an einem Ventil (genauer an dessen Auslass) des unter Überdruck stehenden aufblasbaren Wassersportgeräts angeordnet, so dass das gasförmige Medium bzw. die Luft aus dem Ventil durch den Schalldämpfer nach außen, aus dem Innenraum des Wassersportgeräts in die Umgebung, strömen kann. Vorzugsweise wird dabei an ein Ventil des unter Überdruck stehenden aufblasbaren Wassersportgeräts gekoppelt. Vorteile, die sich durch die Kopplung des Schalldämpfers an das Ventil ergeben, werden später noch genauer erläutert.

Das Ventil wird besonders bevorzugt mittels eines Mechanismus am oder in dem mit dem Ventil gekoppelten Schalldämpfer geöffnet. Durch einen solchen in den Schalldämpfer integrierten Mechanismus zum Öffnen des Ventils, kann das Ventil vorteilhafterweise schnell und ohne viel Mehraufwand durch den Nutzer geöffnet werden.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Wie eingangs aufgeführt, soll der Schalldämpfer vorzugsweise, besonders bevorzugt lösbar, mit einem Ventil des Wassersportgeräts gekoppelt werden. Daher umfasst der Schalldämpfer bevorzugt eine Ankopplungsvorrichtung, bzw. ein Kopplungsstück, um den Schalldämpfer reversibel an das Ventil des Wassersportgeräts zu koppeln.

Durch eine geeignete (insbesondere lösbare) Ankopplungsvorrichtung kann der Schalldämpfer vorteilhafterweise während des Ablassens des gasförmigen Mediums aus dem Ventil des Wassersportgeräts zumindest temporär auf dem Ventil angeordnet sein, wodurch einerseits das gasförmige Medium im Wesentlichen nur über den Schalldämpfer abströmt und andererseits auch ein für den Bediener sicheres Ablassen des gasförmigen Mediums aus dem Wassersportgerät gewährleistet werden kann (z. B. kann der Schalldämpfer so nicht einfach von dem Ventil "abspringen" und eine Verletzungsgefahr darstellen). Zudem muss der Benutzer den Schalldämpfer während des Ablassens des gasförmigen Mediums aus dem Wassersportgerät nicht festhalten.

Bevorzugt handelt es sich bei der Ankopplungsvorrichtung des Schalldämpfers um eine Schnell-Ankopplungsvorrichtung, wodurch das Ankoppeln und Entkoppeln an das Ventil besonders schnell erfolgen kann. Beispiele hierfür wären eine einfache Gewindeverbindung, eine Steckverbindung, eine Klemmverbindung, z.B. mit einer Exzenterklemmung o. Ä., sowie eine Kombination solcher Verbindungsvarianten. Insbesondere ist eine solche Schnell-Ankopplungsvorrichtung bevorzugt so ausgebildet, dass der Schalldämpfer werkzeuglos an das Ventil gekoppelt werden kann. Das heißt es ist dann nicht erforderlich, den Schalldämpfer z. B. mit mehreren Schauben oder dergleichen mittels eines Schraubendrehers festzuschrauben oder zu lösen.

Ganz besonders bevorzugt umfasst die Schnell-Ankopplungsvorrichtung einen Bajonettanschluss bzw. ist als solcher ausgebildet. Ein Bajonettverschluss bzw. Bajonettanschluss ist eine besonders schnell herstell- und lösbare mechanische Verbindung zweier zylindrischer Teile in ihrer Längsachse. Die Teile werden dabei durch Ineinanderstecken und relatives Drehen zueinander verbunden und auch wieder getrennt. Eine solche Bajonett-Schnell-Ankopplungsvorrichtung des Schalldämpfers kann ganz besonders auch passend zu dem bereits oben erwähnten Halkey-Roberts-Bootsventil^{®} aufgebaut sein, da ein Halkey-Roberts-Bootsventil^{®} ohnehin ein Bajonettanschlussstück umfasst, wie noch später erläutert wird. Damit kann der Schalldämpfer mit nahezu allen bereits existierenden, als auch aktuell angebotenen, iSUP Boards genutzt werden.

Weiterhin bevorzugt ist der Schalldämpfer derart ausgebildet, dass das gasförmige Medium unter einem Überdruck von mindestens 0,25 bar, bevorzugt mindestens 0,5 bar, weiter bevorzugt mindestens 0,75 bar und besonders bevorzugt mindestens 1,0 bar geräuschreduziert aus dem Ventil des unter Überdrück stehenden Wassersportgeräts abgelassen werden kann (der Überdruck ist hierbei wie erwähnt der Druck, der zusätzlich zum herrschenden Luftdruck von ca. 1 bar vorliegt). Mit anderen Worten, alle Komponenten des Schalldämpfers sind so ausgelegt, dass sie bei den zuvor genannten Drücken die gewünschte geräuschreduzierende Wirkung erzielen und dabei nicht z. B. geschädigt werden.

Das Wassersportgerät ist entsprechend so ausgelegt, bzw. so ausgebildet, dass es zumindest in einem Teilbereich des Innenkörpers (also zumindest in einer Kammer) mit einem gasförmigen Medium mit einem Überdruck von mindestens 0,25 bar, bevorzugt mindestens 0,5 bar, weiter bevorzugt mindestens 0,75 bar und besonders bevorzugt mindestens 1,0 bar in einem Innenbereich des Wassersportgeräts befüllt wird. Neben iSUPs sind z.B. wie erwähnt die Bodenkammern von speziellen Schlauchbooten, z.B. IRBs (inflatable rescue boats) mit einem gasförmigen Medium (üblicherweise Druckluft) unter einem solch hohen Überdruck befüllt.

Der Schalldämpfer ist besonders bevorzugt so ausgebildet, dass er - insbesondere bei den zuvor genannten Überdrücken von mindestens 0,25 bar, bevorzugt mindestens 0,5 bar, weiter bevorzugt mindestens 0,75 bar und besonders bevorzugt mindestens 1,0 barden Schalldruck, der beim Ablassen des gasförmigen Mediums aus dem Ventil des unter Überdruck stehenden Wassersportgeräts entsteht, um mindestens 20 dB senkt, verglichen mit dem Schalldruck, der beim Ablassen des gasförmigen Mediums ohne Schalldämpfer entsteht.

Handelt es sich beispielsweise um ein iSUP Board, welches im normalen Gebrauch mit Luft unter einem Überdruck von bis zu 1,5 bar befüllt ist, so entsteht beim Ablassen der Luft ohne Schalldämpfer - wie vorherig bereits erwähnt - ein Schalldruck von bis zu 110 dB. Der Schalldämpfer ist nun bevorzugt so ausgebildet, den Schalldruck um mindestens 20 dB zu senken. Dies bedeutet, dass bei der Verwendung des Schalldämpfers zum Ablassen der Luft aus einem iSUP Board der Schalldruck nunmehr einen Maximalwert von 90 dB erreicht. Vorteilhafterweise ergibt sich somit eine deutlich geringere Lärmbelästigung - sowohl für den Nutzer des Schalldämpfers, als auch für Menschen und Tiere in der Umgebung. Die Nutzung von iSUP Boards und das Ablassen der Luft aus den Selbigen in Naturschutzgebieten erfolgt durch den Schalldämpfer also deutlich umweltschonender.

Wie vorherig bereits erwähnt, kann der Schalldämpfer einen Mechanismus umfassen, um das mit dem Schalldämpfer gekoppelte Ventil zu öffnen. Vorzugsweise umfasst der Schalldämpfer hierfür einen Betätiger, der ausgebildet ist, in einem Betriebszustand, in dem der Schalldämpfer mit dem Ventil gekoppelt ist, ein bewegliches Verschlusselement in dem Ventil zu betätigen und das Ventil somit von einer Verschlussstellung in eine Öffnungsstellung zu verbringen. Dadurch kann das gasförmige Medium aus dem Ventil des aufblasbaren Wassersportgeräts entweichen.

Der Schalldämpfer, insbesondere der Betätiger, ist bevorzugt ausgebildet, ein Rückschlagventil zu öffnen. Ein solches Rückschlagventil umfasst üblicherweise ein Verschlusselement, welches vorzugsweise federbelastet, beweglich in einem Ventilgehäuse des Ventils gelagert ist. Das Verschlusselement öffnet das Ventil bei Druck von einer Seite auf das Verschlusselement, wobei durch Druck in der Gegenrichtung (auch "Sperrrichtung" genannt; bei Ventilen für aufblasbare Gegenstände üblicherweise die Richtung in der das gasförmige Medium wieder ausströmen kann) das Verschlusselement das Ventil schließt.

Der Schalldämpfer und insbesondere der Betätiger des Schalldämpfers ist also so ausgebildet, dass mittels des Mechanismus des Ventils, insbesondere des Betätigers oder dergleichen das bewegliche Verschlusselement des Ventils in ausreichender Weise betätigt werden kann, um ein Entweichen des gasförmigen Mediums aus dem Wassersportgerät zu ermöglichen. Dabei wird das bewegliche Verschlusselement durch den Betätiger des Schalldämpfers so weit bewegt, dass das gasförmige Medium schnell aus dem Wassersportgerät entweichen kann. Vorteilhafterweise kann durch den geeigneten in den Schalldämpfer integrierten Betätiger das Ventil einfach und ohne signifikanten Aufwand für den Nutzer des Schalldämpfers geöffnet werden.

Bei einem in größeren Wassersportgeräten üblichen Rückschlagventil, wie z. B. ein Halkey-Roberts-Bootsventil^{®}, umfasst das bewegliche Verschlusselement meist einen Ventilteller, einen Ventilstift und einen am Ventilstift am von dem Ventilteller wegweisenden Ende angeordneten Druckknopf. Um ein solches Rückschlagventil in eine Öffnungsstellung zu verbringen, wird von außen vom Benutzer üblicherweise dieser Druckknopf gedrückt, wodurch das bewegliche Verschlusselement vom Ventilsitz weg bewegt wird. Dadurch schließt der Ventilteller einen Innenraum des Wassersportgeräts nicht mehr von einer äußeren Atmosphäre ab und das gasförmige Medium aus dem Innenraum des Wassersportgeräts kann entweichen.

Besonders bevorzugt ist der Mechanismus, insbesondere ein Betätiger, des Schalldämpfers, so ausgebildet, dass mit seiner Hilfe der Druckknopf des Ventilstifts des Verschlusselements eines Halkey-Roberts-Bootsventils^{®} betätigt werden kann, wenn der Schalldämpfer über den, bereits erwähnten, Bajonettanschlussstück an das Halkey-Roberts-Bootsventil^{®} angekoppelt ist.

Der Betätiger umfasst zumindest einen Betätigungsbolzen. Dieser kann z. B. beweglich im oder am Schalldämpfer gelagert sein, so dass ein Benutzer über den Betätigungsbolzen das bewegliche Verschlusselement im Ventil gegen die Sperrrichtung bewegen kann und insbesondere auf den besagten Druckknopf des Halkey-Roberts-Bootsventils^{®} drücken kann. Der Betätigungsbolzen ist im einfachsten Fall als ein länglicher Körper ausgebildet, der vorzugsweise zylinderförmig ist, aber durchaus auch in einer anderen länglichen Form ausgebildet sein kann (z.B. als Schraube). Der Betätiger kann im Wesentlichen nur den Betätigungsbolzen umfassen, um das bewegliche Verschlusselement des Ventils in die Öffnungsstellung zu verbringen.

Der Betätigungsbolzen ist wie erwähnt bevorzugt zylindrisch ausgebildet und weist bevorzugt eine Länge von mindestens 65 mm, besonders bevorzugt eine Länge von mindestens 75 mm und bevorzugt eine Länge von höchstens 95 mm, besonders bevorzugt eine Länge von höchstens 85 mm auf.

Der Betätigungsbolzen weist bevorzugt einen Durchmesser von mindestens 3 mm, besonders bevorzugt einen Durchmesser von mindestens 3,5 mm und bevorzugt einen Durchmesser von höchstens 5 mm, besonders bevorzugt einen Durchmesser von höchstens 4,5 mm auf.

Der Betätigungsbolzen ist bevorzugt aus Edelstahl angefertigt, da ein Kontakt mit Wasser nicht ausgeschlossen ist.

Der Betätigungsbolzen kann optional an einer Bedienerseite, an der ein Bediener den Betätigungsbolzen betätigen kann, aber auch einen Bolzenkopf aufweisen, an welchem bevorzugt ein Knopf angeordnet ist. Vorteilhafterweise erlaubt ein solcher Bolzenkopf bzw. Knopf am Betätigungsbolzen eine besonders bedienerfreundliche Handhabung des Schalldämpfers, wobei der Betätigungsbolzen über den Knopf beispielsweise durch eine simple Daumen- oder Fingerbewegung in Bewegung versetzt werden kann, um im Betrieb das Ventil zu öffnen.

Am Betätigungsbolzen kann an einem zum Ventil weisenden Ende vorzugsweise auch ein Druckstück angeordnet sein, welches im Betrieb auf das bewegliche Verschlusselement des Ventils drückt. Das Druckstück ist vorteilhafterweise ausgebildet, im Betriebszustand auf dem besagten Druckknopf des beweglichen Verschlusselements des Ventils, insbesondere Halkey-Roberts-Bootsventils^{®}, aufzuliegen, um das bewegliche Verschlusselement in die Öffnungsstellung zu verbringen.

Das Druckstück ist bevorzugt in einem Querschnitt senkrecht zu einer Längsachse des Betätigungsbolzens kreuzförmig ausgebildet. Der kreuzförmige Querschnitt hat den Vorteil, dass eine breite Auflagefläche in zwei zueinander senkrechten Richtungen erreicht wird und dennoch genügend Freiraum für aus dem Ventil ausströmendes gasförmiges Medium verbleibt. Dies wird später noch ersichtlich. Das Druckstück kann aber auch eine beliebige andere Form aufweisen, z. B. zylindrisch, würfelförmig, quaderförmig oder rund, gegebenenfalls mit geeigneten Durchbrüchen für das im Betrieb ausströmende gasförmige Medium.

Das Druckstück weist bevorzugt eine Länge von mindestens 8 mm, besonders bevorzugt eine Länge von mindestens 9 mm und bevorzugt eine Länge von höchstens 12 mm, besonders bevorzugt eine Länge von höchstens 11 mm auf.

Das Druckstück weist bevorzugt einen Durchmesser von mindestens 15 mm, besonders bevorzugt einen Durchmesser von mindestens 15,5 mm und bevorzugt einen Durchmesser von höchstens 17 mm, besonders bevorzugt einen Durchmesser von höchstens 16,5 mm auf.

Das Drückstück ist bevorzugt aus einem Kunststoff oder auch aus einem Naturmaterial oder Metall mit vergleichbarer Festigkeit oder aus einer Kombination der vorrangig genannten Materialien aufgebaut und besonders bevorzugt ist das Druckstück aus Polyamid aufgebaut, wobei das Polyamid glasfaserverstärkt sein kann.

Der Schalldämpfer umfasst ein Schalldämpferelement, welches im Betriebszustand in einem Abströmbereich des aus dem Ventil abströmenden gasförmigen Mediums angeordnet ist. Dieses Schalldämpferelement ist das zentrale Element, welches dafür sorgt, dass das gasförmige Medium geräuschreduziert aus dem Wassersportgerät abgelassen werden kann.

Vorzugsweise ist das Schalldämpferelement zylinderförmig ausgebildet, um ein besonders gleichmäßiges und / oder schnelles Ablassen des gasförmigen Mediums aus dem Wassersportgerät zu gewährleisten.

Besonders bevorzugt weist das Schalldämpferelement zumindest eine Aussparung bzw. einen Hohlraum auf.

Das Schalldämpferelement ist also besonders bevorzugt ein einseitig geschlossener Hohlzylinder mit einer im Betrieb in Richtung Ventil weisenden offenen Seite und einer vom Ventil entfernten geschlossenen Stirnseite. Die Aussparung dient somit als ein Luftführungskanal, der im Betriebszustand das gasförmige Medium aus dem Ventil des Wassersportgeräts leitet, bzw. als eine Art "Ausbreitungsraum", in dem sich das aus dem Ventil strömende gasförmige Medium zunächst im Schalldämpferelement ausbreiten kann.

Vorteilhafterweise erlaubt diese Aussparung, dass das gasförmige Medium schnell und ohne signifikante Zeitverzögerung aus dem Wassersportgerät und über das Schalldämpferelement entweichen kann, da durch den Luftführungskanal bzw. den Ausbreitungsraum die Oberfläche des Schalldämpferelements auf die das gasförmige Element im Betrieb trifft, signifikant vergrößert wird.

Zusätzlich weist das Schalldämpferelement bevorzugt zumindest einen Durchbruch - bevorzugt in der geschlossenen Stirnseite im Bereich der Zylinderachse - auf, durch den beispielsweise der Betätigungsbolzen des Betätigers hindurch geführt werden kann. Dies erlaubt eine Anordnung des Betätigungsbolzens im Bereich der Zylinderachse des Schalldämpfers und gleichzeitig eine stabile Führung des Betätigers durch den Nutzer des Schalldämpfers. Das Schalldämpferelement dient zusätzlich als eine Art "Abdichtung" im Bereich des Durchbruchs, durch welchen im Betrieb der Betätiger durchgeführt wird. Somit kann die Druckluft vorteilhafterweise nicht unkontrolliert und ungedämmt entweichen.

Vorzugsweise besteht das Schalldämpferelement im Wesentlichen aus einem porösen Material, wie beispielsweise aus einem porösen Kunststoff und / oder geeigneten Papier und / oder Naturfasern. Besonders bevorzugt besteht das Schalldämpferelement im Wesentlichen aus porösem Polyethylen bzw. gesintertem Kunststoff.

Vorteilhafterweise erlauben die oben genannten Materialien eine signifikante Oberflächenvergrößerung im Innenbereich des Schalldämpferelements. Durch diese Oberflächenvergrößerung wird erreicht, dass das Geräusch, welches beim Ausströmen des gasförmigen Mediums aus dem Wassersportgerät entsteht, deutlich reduziert werden kann.

Je nach Material des Schalldämpferelements, kann dieses bevorzugt auch in eine gewünschte Form (z. B. den erwähnten einseitig geschlossenen Hohlzylinder) gepresst sein.

Das Material, das bevorzugte Volumen, sowie der Durchmesser des Schalldämpferelements sind in weiten Grenzen beliebig wählbar und kann auch von den eingesetzten Materialien, den Drücken, einer gewünschten Durchflussrate (also wie schnell eine Entleerung des Wassersportgeräts möglich sein soll) und insbesondere dem gewünschten Grad der Geräuschreduzierung abhängig sein.

In einem Ausführungsbeispiel beträgt das Volumen des Schalldämpfers mindestens 20 cm³, besonders bevorzugt mindestens 21 cm³ und bevorzugt höchstens 26 cm³, besonders bevorzugt höchstens 25 cm³.

Der Durchmesser des Schalldämpferelements beträgt bevorzugt mindestens 22 mm, besonders bevorzugt mindestens 23 mm und bevorzugt höchstens 26 mm, besonders bevorzugt höchstens 25 mm.

Das Schalldämpferelement wird bevorzugt von einem Gehäuse des Schalldämpfers aufgenommen. Das Gehäuse ermöglicht dabei eine besonders effiziente und stabile Handhabung des Schalldämpferelements.

Dabei ist das Gehäuse besonders bevorzugt ausgebildet, auch den Betätiger bzw. den Betätigungsbolzen zumindest teilweise in sich aufzunehmen.

Besonders bevorzugt weist das Gehäuse an einer im Betrieb vom Ventil abgewandten Seite einen Deckel auf, welcher vorzugsweise einen Durchbruch zum Durchführen des Betätigungsbolzens aufweist. Dadurch kann gewährleistet werden, dass der Betätigungsbolzen stabil in vertikaler Richtung auf und ab geführt werden kann.

Weiterhin besonders bevorzugt bildet das Gehäuse an einem Ende das oben bereits erwähnte Kopplungsstück zur Ankopplung an das Ventil aus, wobei das Kopplungsstück ganz besonders bevorzugt einen Bajonettanschluss aufweist.

Somit kann gewährleistet werden, dass alle wesentlichen Teile des Schalldämpfers (also zumindest Schalldämpferelement und Betätiger, sowie das Kopplungsstück) in einer Baugruppe zusammenmontiert sind und synergistisch zusammenwirken können.

An das Kopplungsstück schließt sich bevorzugt ein als Käfigteil ausgebildeter Bereich des Gehäuses zur Aufnahme des Schalldämpferelements an. In dem Käfigteil sind bevorzugt eine Vielzahl an Durchbrüchen ausgebildet, wobei die Durchbrüche möglichst groß sind, so dass zwischen den jeweiligen Durchbrüchen lediglich relativ dünne - aber stabile - Stege ausgebildet sind.

Vorteilhafterweise wird dadurch, dass der Bereich des Gehäuses, in dem sich das Schalldämpferelement befindet, vorzugsweise als Käfigteil ausgebildet ist, ein hoher Durchsatz des abströmenden gasförmigen Mediums erreicht, da ein großer Bereich der Außenfläche des Schalldämpferelements (von dem Gehäuse) unbedeckt vorliegt und somit direkt an die den Schalldämpfer umgebende Atmosphäre angrenzt, an die das gasförmige Medium letztendlich abgegeben wird. Dennoch wird Schalldämpferelement durch den Käfig von Beschädigungen durch äußere Einwirkungen, insbesondere beim Transport, relativ gut geschützt.

Vorzugsweise ist das Gehäuse mit dem Käfigteil im Wesentlichen zylindrisch ausgebildet. Dadurch ermöglicht sich eine im Wesentlichen passgenaue Aufnahme des bevorzugt zylinderförmigen Schalldämpferelements in den Käfigteil des Gehäuses.

Vorzugsweise ist das Gehäuse aus einem Kunststoff, Naturmaterial oder Metall mit vergleichbarer Festigkeit oder einer Kombination der vorherig genannten Materialien angefertigt. Besonders bevorzugt ist das Gehäuse aus Polyamid angefertigt, wobei das Polyamid glasfaserverstärkt sein kann.

Vorzugsweise umfasst der Schalldämpfer eine Dichtung, um den Schalldämpfer dicht an das Ventil zu koppeln. Die Dichtung ist bevorzugt als Ringdichtung ausgebildet und umfasst ein elastisches Element, welches vorzugsweise durch eine starke Reibkraft gekennzeichnet ist. Die Ringdichtung liegt im Betrieb nicht nur bevorzugt an der Kante des Ventils auf, sondern umschließt dieses etwas. Vorteilhafterweise erlaubt die Dichtung, dass das gasförmige Medium im Wesentlichen nur durch den Schalldämpfer bzw. durch das Schalldämpferelement aus dem Ventil abgelassen wird und keine unabsichtlichen Geräusche wie Pfeifen etc. durch neben dem Schalldämpferelement verbeiströmendes gasförmiges Medium erzeugt werden.

Die Dichtung ist bevorzugt über dem Kopplungsstück an dem Gehäuse des Schalldämpfers angebracht.

Geeignete Materialien für die Dichtung sind etwa Silikon, Gummi oder Kork.

Vorteilhafterweise sind so also alle bevorzugten Bauteile des Schalldämpfers, stabil in oder an dem Gehäuse angeordnet. Dadurch wird die Wirkung des Schalldämpfers - also die Reduktion des Geräusches, welches beim Ablassen eines gasförmigen Mediums aus einem Wassersportgerät entsteht - optimiert. Zusätzlich können die bevorzugten Bestandteile, aus denen der Schalldämpfer aufgebaut ist, durch Anordnung in oder an dem Gehäuse nicht verloren werden. Ein weiterer Vorteil ist, dass das Gehäuse dem Schalldämpfer zu mehr Stabilität verhilft. Dies ist ein großer Vorteil, da das aus dem Ventil ausströmende gasförmige Medium unter Überdruck steht. Ein stabiler Schalldämpfer mit Gehäuse zeichnet sich dabei mit einer hohen Lebensdauer aus.

Ein weiterer Vorteil des vorherig beschriebenen Aufbaus des Schalldämpfers mit den in einem Gehäuse angeordneten einzelnen Komponenten ist, dass einzelne defekte Komponenten ausgetauscht werden können, ohne dass der gesamte Schalldämpfer komplett ausgetauscht werden müsste.

Die Erfindung wird im Folgenden unter Hinweis auf die beigefügten Figuren anhand eines Ausführungsbeispiels noch einmal näher erläutert. Dabei sind in den verschiedenen Figuren gleiche Komponenten mit identischen Bezugsziffern versehen. Es zeigen:
Figur 1 eine perspektivische Ansicht auf ein Halkey-Roberts-Bootsventil^{®} für iSUP Boards mit Bajonettanschluss,
Figur 2 einen Längsschnitt durch das Halkey-Roberts-Bootsventil^{®} für iSUP Boards gemäß Figur 1 entlang der in Figur 4 gezeigten Schnittlinie B-B, wobei sich das Ventil in einer Öffnungsstellung befindet,
Figur 3 eine Draufsicht auf das Halkey-Roberts-Bootsventil^{®} für iSUP Boards gemäß den Figuren 1 und 2,
Figur 4 einen Querschnitt durch das Halkey-Roberts-Bootsventil für iSUP Boards gemäß den Figuren 1 bis 3 entlang der in Figur 2 gezeigten Schnittlinie A-A,
Figur 5 eine perspektivische Ansicht eines Ausführungsbeispiels eines Schalldämpfers,
Figur 6 einen Längsschnitt durch den Schalldämpfer gemäß Figur 5,
Figur 7a eine perspektivische Ansicht auf einen Knopf des Schalldämpfers gemäß den Figuren 5 und 6,
Figur 7b eine perspektivische Ansicht auf einen Betätigungsbolzen des Schalldämpfers gemäß den Figuren 5 und 6,
Figur 7c eine perspektivische Ansicht auf ein Druckstück des Schalldämpfers gemäß den Figuren 5 und 6,
Figur 7d eine perspektivische Ansicht auf ein Gehäuse des Schalldämpfers gemäß den Figuren 5 und 6,
Figur 7e eine perspektivische Ansicht auf ein Schalldämpferelement des Schalldämpfers gemäß den Figuren 5 und 6,
Figur 7f eine perspektivische Ansicht auf einen Deckel des Schalldämpfers gemäß den Figuren 5 und 6,

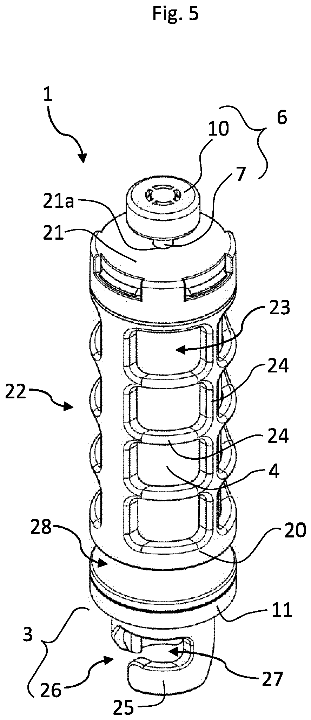

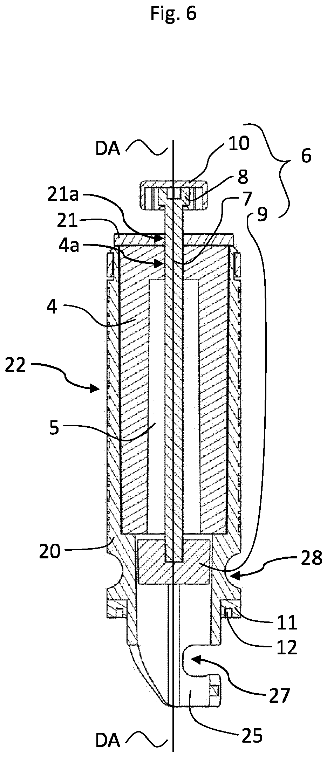

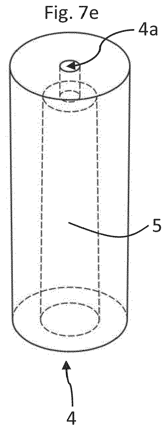

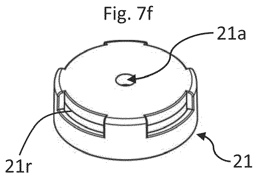

Figur 7e eine perspektivische Ansicht auf eine Dichtung des Schalldämpfers gemäß den Figuren 5 und 6,

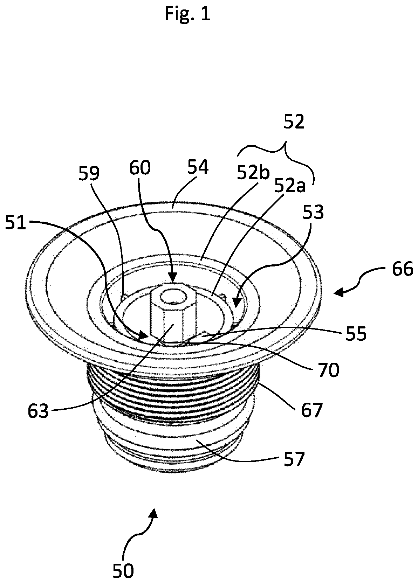

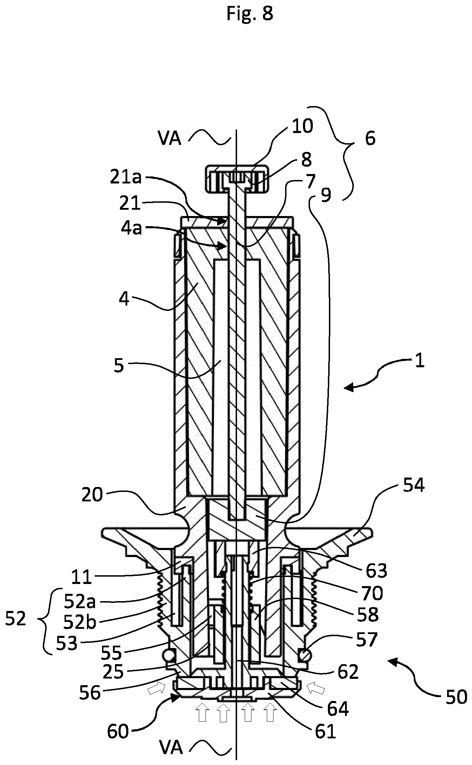

Figur 8 ein Längsschnitt durch den Schalldämpfer gemäß den Figuren 5 und 6, welcher an das Halkey-Roberts-Bootsventil^{®} für iSUP Boards gemäß den Figuren 1 bis 4 angeschlossen ist, wobei sich das Ventil in einer Verschlussstellung befindet,

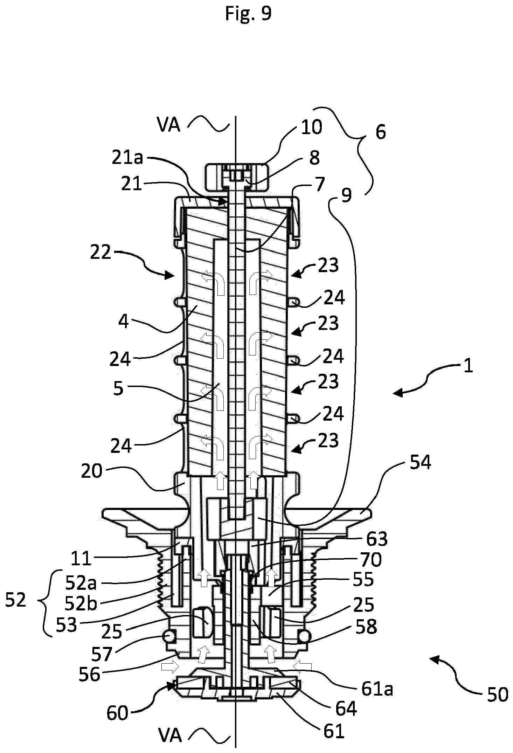

Figur 9, ein Längsschnitt ähnlich wie in Figur 8, jedoch in einer zu Figur 8 verdrehten Schnittebene, wobei sich das Ventil aber in einer Öffnungsstellung befindet.

Nachfolgend wird die Erfindung an einer besonders bevorzugten Ausführungsform eines Schalldämpfers 1 (Figuren 5 bis 9) zur Kopplung an ein Halkey-Roberts-Bootsventil^{®} 50 (Figuren 1 bis 4 und Figuren 8 und 9) für iSUP Boards 80 beschrieben, da die für iSUP Boards 80 verwendete Ventile 50 derzeit fast ausschließlich Halkey-Roberts-Bootsventile^{®} sind. Es sei an dieser Stelle aber noch einmal darauf hingewiesen, dass die Erfindung nicht auf Halkey-Roberts-Bootsventile^{®} oder iSUP Boards beschränkt ist. Außerdem wird, ohne Beschränkung der Allgemeinheit, davon ausgegangen, dass das gasförmige Medium (Druck-)Luft ist

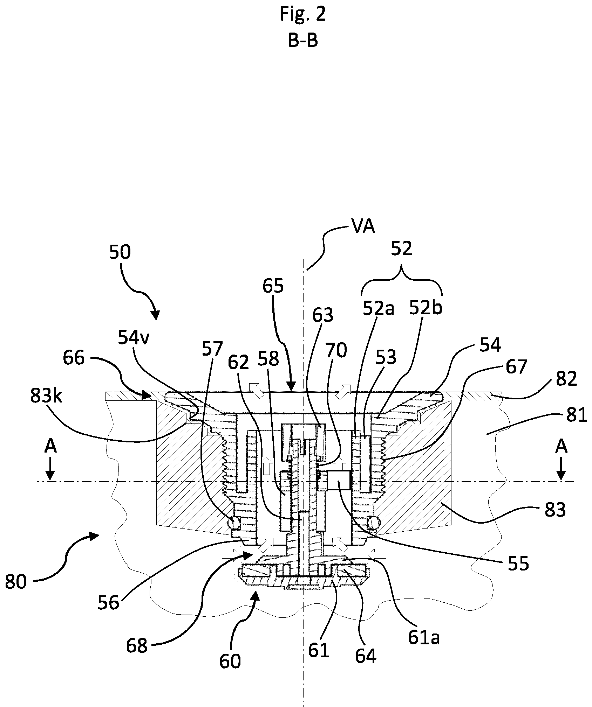

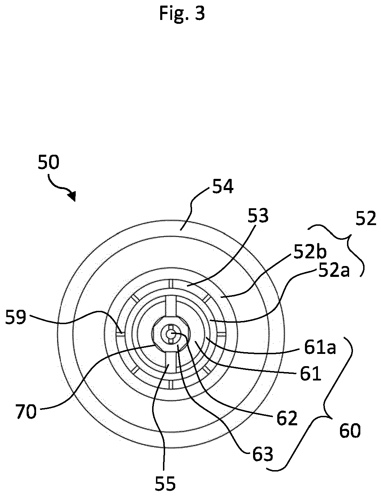

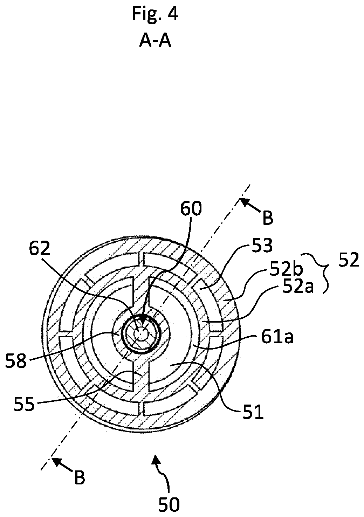

Um die vorteilhaften Funktionen des Schalldämpfers 1 besser zu erläutern, wird im Folgenden zunächst an Hand der Figuren 1 bis 4 ein Halkey-Roberts-Bootsventil^{®} 50 und dessen Funktionsweise beschrieben, wobei Figur 1 eine perspektivische Ansicht auf das Ventil 50 zeigt, Figur 2 einen Längsschnitt durch das Ventil 50 entlang der in Figur 4 gezeigten Schnittlinie B-B, Figur 3 eine Draufsicht auf das Ventil 50 und Figur 4 einen Querschnitt durch das Ventil 50 entlang der in Figur 2 gezeigten Schnittlinie A-A.

Das Ventil 50 weist einen Ventilkörper 66 (auch Ventilgehäuse 66 genannt) auf, dass in Längsrichtung in etwa trichterförmig ausgebildet (Figuren 1 und 2) ist. An dem schmaleren Ende des Ventilkörpers 66, welches in den Innenraum 81 des iSUP Boards 80 gerichtet ist, ist ein entlang einer Ventilachse VA beweglich im Ventilkörper 66 gelagertes Verschlusselement 60 mit einem Ventilteller 61 angeordnet, der später noch genauer beschrieben wird. An einer breiteren gegenüberliegenden Seite (nachfolgend als "Ventiloberseite" bezeichnet) befindet sich ein Abströmbereich 65 für die Luft. Der Abströmbereich 65 wird von einem Ventilrand 54 begrenzt, wobei der Ventilrand 54 auf einer flexiblen Wand 82 des iSUP Boards 80 aufsitzt und einen Übergang zum iSUP Board 80 darstellt.

Das Ventil 50 ist in einem mit einer Hülle bzw. flexiblen Wand 82 des iSUP Boards 80 fest verbundenen Einschraubteil 83 mittels einer Schraubvorrichtung 67 angeordnet (siehe hierzu v. A. Figur 2). Eine Dichtung 57 in Form eines O-Rings 57 sorgt für einen festen Sitz in dem Einschraubteil 83 und übt gleichzeitig eine abdichtende Funktion aus. Die Wand 82 des iSUP Boards 80 ragt dabei unter den Ventilrand 54 und wird zwischen Ventilrand 54 und Einschraubteil 83 eingeklemmt, wobei ringförmig umlaufende Vorsprünge 54v an der Unterseite des Ventilrands 54 und damit zusammenwirkende ringförmig umlaufende Kanten 83k an der Oberseite des Einschraubteils 83 für eine zusätzliche Abdichtung sorgen.

Der Ventilkörper 66 wird vornehmlich durch eine als Hohlzylinder ausgebildete Hülse 52 gebildet. Die Hülse 52 ist zumindest in einem Abschnitt als eine Art doppelwandiger Zylinder durch eine umlaufende Zylinderinnenwand 52a, eine umlaufende Zylinderaußenwand 52b, sowie eine zwischen Zylinderinnenwand 52a und Zylinderaußenwand 52b der Hülse 52 angeordnete umlaufende Nut 53 gekennzeichnet. Die Zylinderinnenwand 52a ist mit der Zylinderaußenwand 52b über radiale Verbindungsstege 59 (siehe Figuren 3 und 4) verbunden.

Die Zylinderinnenwand 52a der Hülse 52 ist über zwei sich radial gegenüberliegenden, radiale Stege 55 (im Folgenden auch "Haltestege" 55 genannt) mit einem im Innenraum des Ventils 50 angeordnetem Lager 58 verbunden, wobei das Lager 58 ebenfalls als Hohlzylinder 58 ausgebildet ist. Somit dient die Zylinderinnenwand 52a der Hülse 52 auch als Haltevorrichtung des Lagers 58. Gleichzeitig dient der Bereich zwischen Zylinderinnenwand 52a und Hülse 52 gemeinsam mit den Haltestegen 55 als Aufnahmebereich 51 bzw. Gegenkopplungsstück für ein Bajonettanschlussstück, mit dem üblicherweise eine Luftpumpe zum Aufblasen des iSUP Boards 80 mit dem Ventil 50 gekoppelt wird.

In dem Lager 58 ist das Verschlusselement 60 des Ventils 50 wie oben erwähnt entlang der Ventilachse VA beweglich gelagert. Dieses "bewegliche" Verschlusselement 60 umfasst - wie besonders im Schnitt in Figur 2 gut zu sehen ist - einen Ventilteller 61, einen Ventilstift 62 und einen Druckknopf 63. Das Lager 58 ist auch zum Führen des Ventilstifts 62 ausgebildet, so dass der Ventilstift 62 entlang der Ventilachse VA auf und ab bewegt werden kann. Der Druckknopf 63 ist an dem vom Ventilteller 61 wegweisenden Ende des Ventilstifts 62 montiert und sorgt dafür, dass das Verschlusselement 60 nicht in Richtung des Ventiltellers 61 aus dem Lager 58 herausrutschen kann.

Der Ventilteller 62 liegt in einer Verschlussstellung VS des Ventils 50 auf einem Ventilsitz 56 auf (siehe hierzu auch die Stellung in der späteren erläuterten Figur 8). Der Ventilteller 62 wird automatisch gegen den Ventilsitz 56 gedrückt, wenn ein Überdruck im iSUP Board 80 vorliegt. Für einen möglichst dichten Abschluss ist nahe dem äußeren Bereich 61a des Ventiltellers 61, eine (Ring-)Dichtung 64 angeordnet, gegen welche der Ventilteller 61 in der Verschlussstellung VS auf dem Ventilsitz 56 drückt, um ein Entweichen der Luft aus dem iSUP Board 80 aus dem Ventil 50 zu verhindern. Der Ventilteller 62 wird zusätzlich durch die Federspannung einer (hier zischen einer Oberkante des Lagers 58 und einer Unterkante des Druckknopfes 63 auf dem Ventilstift 62 angeordneten) Feder 70 gegen den Ventilsitz 56 gedrückt, so dass das Ventil 50 in einer Ruhestellung, also bei Druckausgleich auf beiden Seiten, in der Verschlussstellung VS ist. Dies erleichtert das Befüllen des iSUP Boards 80, vor allem am Anfang.

In einer Öffnungsstellung OS des Ventils 50 wird von der Ventiloberseite aus der Druccknopf 63 des beweglichen Verschlusselements 60 betätigt, also entgegen der Federkraft und dem Innendruck, nach unten gedrückt. Dadurch wird die Feder 70 gestaucht und der Ventilteller 61 vertikal in Richtung Innenraum 81 des iSUP Boards 80 bewegt, wodurch das gasförmige Medium (dargestellt durch dicke Pfeile) aus dem Innenraum 81 des iSUP Boards 80 durch die Eintrittsöffnung 68 aus dem Ventil 50 entweichen kann (Figur 2).

Ein bevorzugtes Ausführungsbeispiel des erfindungsgemäße Schalldämpfer 1 ist nun ausgebildet, um durch ein solches Ventil 50 gemäß den Figuren 1 bis 4 geräuschreduziert die Luft aus einem aufgeblasenen Wassersportgerät 80 abzulassen.

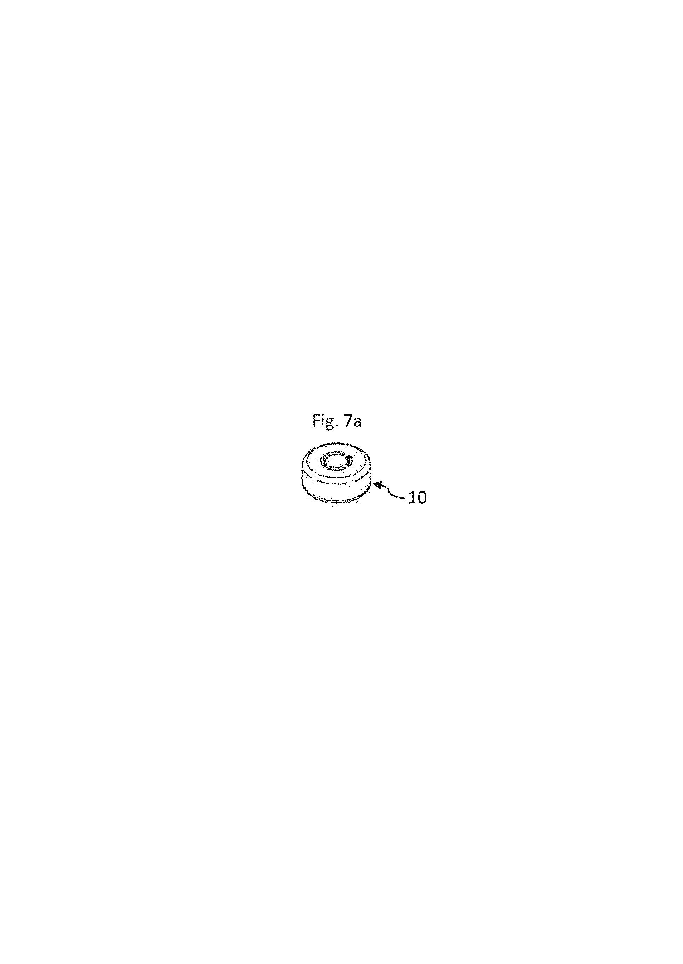

Dieses Ausführungsbeispiel eines solchen Schalldämpfers 1 wird nachfolgend an Hand der Figuren 5, 6 und 7a bis 7g erläutert, wobei Figur 5 eine perspektivische Ansicht des Schalldämpfers zeigt, Figur 6 einen Längsschnitt durch den Schalldämpfer zeigt und die Figuren 7a bis 7g je individuelle Bauteile des Schalldämpfers zeigen.

Der Schalldämpfer 1 weist ein im Wesentlichen zylinderförmiges Gehäuse 20 auf, dass sich entlang einer Symmetrieachse (im Folgenden auch der "Dämpferachse" DA bezeichnet) erstreckt. An einem Ende des Gehäuses 20 ist ein Deckel 21 angeordnet. An dem anderen, gegenüberliegendem, Ende, weist das Gehäuse 20 ein (hier integriertes) Kopplungsstück 3 auf, um den Schalldämpfer 1 an das Ventil 50 zu koppeln.

Das Kopplungsstück 3 ist hierzu als Bajonettanschlussstück 3 ausgebildet, indem in einen zylinderförmigen Endabschnitt an der Stirnseite des Kopplungsstücks 3 des Gehäuses 20 an zwei radial gegenüberliegenden Seiten jeweils ein Längsschlitz 26 eingebracht ist, an den sich in einem Abstand von der Stirnseite jeweils ein Querschlitz 27 anschließt, wodurch jeweils eine Nase 25 gebildet wird. Das Bajonettanschlussstück 3 wird im Betrieb in dem Aufnahmebereich 51 des Ventils 50 für das Kopplungsstück 3 bzw. Bajonettanschlussstück 3 angeordnet, wobei die Nase 25 des Bajonettanschlussstücks 3 unter die radialen Haltestege 55 des Ventils 50 geschoben wird und Ventil 50 und Schalldämpfer 1 so eine schnell lösbare Verbindung herstellen.

Der Hauptteil des Körpers des Gehäuses 20 ist im Wesentlichen als Käfigteil 22 ausgebildet. Der Käfigteil 22 weist eine Vielzahl von Durchbrüchen 23 auf. Die Anzahl und Form der Durchbrüche 23 kann je nach Ausführungsform des Käfigteils 22 des Schalldämpfers 1 unterschiedlich sein. Vorzugsweise sind die Durchbrüche 23 möglichst groß, wobei die Sprossen 24 relativ schmal, aber dennoch stabil genug sind, den mechanischen Belastungen, die der Schalldämpfer 1 im Betrieb, sowie während des Transports, erfährt, standzuhalten.

Unter dem Käfigteil 22 des Gehäuses 20 - in Richtung des Kopplungsstücks 3 - ist eine Griffrille 28 angeordnet und darunter eine Ringdichtung 11. Die Ringdichtung wird von der offenen Stirnseite des Schalldämpfers 1 aus über das Kopplungsstück 3 geschoben. Neben der abdichtenden Funktion, dient die Ringdichtung 11 im Betrieb auch als Auflagefläche des Schalldämpfers 1 auf dem Ventil 50. Der Schalldämpfer 1 liegt somit im Betrieb mit der Ringdichtung 11 auf der Hülse 52 des Ventils 50 und insbesondere auf der Zylinderinnenwand 52a der Hülse 52 auf. Vorteilhafterweise weist die Ringdichtung 11 eine umlaufende Nut 12 auf, welche ausgebildet ist im Betrieb besonders passgenau auf dem Innenbereich 52a der Hülse 52 des Ventils 50 aufzusitzen (siehe auch Figuren 8 und 9).

Im Käfigteil 22 ist das zylinderförmige Dämpferelement 4 angeordnet. Wie vorherig bereits erwähnt ist die nach außen hin freie Oberfläche des Schalldämpferelements 4 umso grö-ßer, je größer die Durchbrüche 23 des Käfigteils 22 sind, durch die die Luft entweichen kann und desto höher ist der Durchsatz des Schalldämpfers 1, also desto schneller ist der Prozess des Luftablassens aus dem Wassersportgerät 80 beendet.

In diesem Ausführungsbeispiel ist das Dämpferelement 4 ein einseitig geschlossener Hohlzylinder 4 dessen Öffnung in Richtung Kopplungsstück 3 des Schalldämpfers 1 weist.

Der Hohlraum 5 des Schalldämpferelements 4 dient im Betrieb als Luftführungskanal 5 bzw. Ausdehnungsraum für die aus dem Ventil 50 entweichende Luft.

Zudem weist der Schalldämpfer 1 hier einen Betätiger 6 auf. Der Betätiger 6 umfasst einen Betätigungsbolzen 7, einen Knopf 10 und ein Druckstück 9. Der Betätigungsbolzen 7 verläuft im Bereich der (zentralen) Dämpferachse DA durch einen Durchbruch 21a des Deckels, sowie durch einen Durchbruch 4a und den Luftführungskanal 5 des Schalldämpferelements 4. Mittels des Druckstücks 9 des Betätigers 6 kann im Betrieb der Druckknopf 63 des beweglichen Verschlusselements 60 des Ventils 50 betätigt werden, wie dies später noch anhand der Figuren 8 und 9 näher erläutert wird.

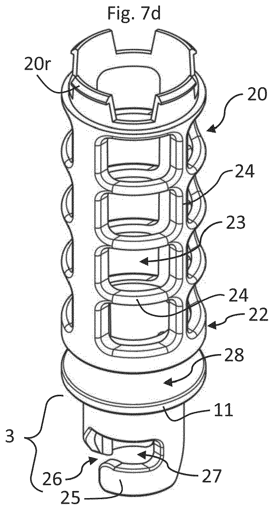

Vorteilhafterweise ist die Montage des Schalldämpfers 1 bei dem zuvor erläuterten Ausführungsbeispiel besonders einfach. Dies soll nun zunächst anhand der Figuren 7a bis 7g erläutert werden:
In dem Käfigteil 22 des Gehäuses 20 (Figur 7d) des Schalldämpfers 1 wird das Schalldämpferelement 4 (Figur 7e) angeordnet, wobei das Schalldämpferelement 4 durch eine Öffnung der am Käfigteil 22 angeordneten (in Figur 7e oberen) Stirnseite des Schalldämpfers 1 eingeführt wird. Das Schalldämpferelement 4 wird so angeordnet, dass der Hohlraum 5 des Luftführungskanals 5 in Richtung Kopplungsstück 3 des Schalldämpfers 1 weist. Nun wird der Deckel 21 (Figur f) auf der soeben beschriebenen Öffnung des Käfigteils 22 angeordnet, wobei am offenen Ende des Käfigteils 22 radial außen angeordnete Rastnasen 20r mit Rastöffnungen 21r im Deckel 21 zusammenwirken, um den Deckel 21 sicher am Gehäuse 20 zu befestigen.

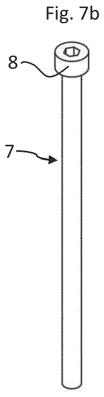

Der im Wesentlichen zylinderförmige Betätigungsbolzen 7 (Figur 7b) weist wie erwähnt an einer Stirnseite einen Bolzenkopf 8 auf. Der Betätigungsbolzen 7 wird nun mit seiner dem Bolzenkopf 8 gegenüberliegende Stirnseite zuerst durch die Aussparung 21a des Deckels 21, sowie anschließend durch die Aussparung 4a des Dämpferelements 4 durchgeführt. Der Bolzenkopf 8 weist einen größeren Durchmesser als der Durchbruch 21a des Deckels 21 auf, weshalb der Betätigungsbolzen 7 nicht einfach durch Deckel 21 und Schalldämpferelement 4 hindurchgleiten kann.

An dem Bolzenkopf 8 wird noch der Knopf 10 (Figur 7a) angeordnet.

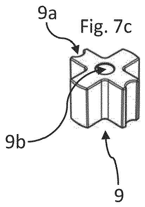

An der gegenüberliegenden (in Figur 7b unteren) Stirnseite des Betätigungsbolzens 7 wird das Druckstück 9 (Figur 7c) angeordnet. Das Druckstück 9 weist eine im Querschnitt kreuzförmige Form auf. Des Weiteren weist das Druckstück 9 einen Durchbruch 9b bzw. eine Bohrung 9b auf, in der das Druckstück 9 an dem Betätigungsbolzen 7 montiert werden kann. Zum Beispiel kann es sich um eine Gewindebohrung 9b handeln, in welche ein Gewindeabschnitt an der unteren Stirnseite des Gewindebolzens 7 eingeschraubt werden kann.

Zusätzlich weist hier das Druckstück 9 an zwei gegenüberliegenden Seiten eine Nut 9a auf, in welche (nicht dargestellte) Führungswulste im Inneren des Gehäuses 20 des Schalldämpfers 1 eingreifen. Dies bewirkt eine Verdrehsicherung des Druckstücks 9 während der Montage des Druckstücks 9 an dem Betätigungsbolzen 7. Das heißt, während der Betätigungsbolzen 7 in die Aussparung 9b des Druckstücks 9 eingedreht wird, dreht sich das Druckstück 9 nicht mit und die relative Position des Druckstücks 9 am Betätigungsbolzen 7 kann justiert werden.

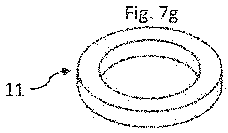

Schließlich wird die Dichtung 11 (Figur 7g) von der dem Deckel 21 gegenüberliegenden Stirnseite des Gehäuses 20 über das Kopplungsstück 3 geschoben.

Der so montierte Schalldämpfer 1 kann dann an einem Halkey-Roberts-Bootsventil^{®} 50 montiert werden.

Figur 8 zeigt hierzu einen Längsschnitt durch den Schalldämpfer 1 gemäß den Figuren 5 und 6, welcher an das Halkey-Roberts-Bootsventil^{®} 50 für iSUP Boards 80 gemäß den Figuren 1 bis 4 angeschlossen ist, wobei sich das Ventil 50 in einer Verschlussstellung VS befindet.

Der Schalldämpfer 1 ist über das Bajonettanschlussstück 3, 51 lösbar aber stabil an dem Ventil 50 angebracht. Hierfür wird der Schalldämpfer 1, mit dem Bajonettanschlussstück 3 voran, in den Aufnahmebereiche 51 des Ventils 50 gesteckt, wobei die radialen Haltestege 55 des Ventils 50 in die Längsschlitze 62 des Bajonettanschlussstück 3 eingreifen. Die Dämpferachse DA und die Ventilachse VA sind dann koaxial zueinander angeordnet (siehe Figur 8). Dann wird der Schalldämpfer 1 etwas verdreht, so dass die radialen Haltestege 55 in die Querschlitze 27 (siehe Figur 5) gelangen, und somit - wie bereits erläutert - die Nasen 25 des Schalldämpfers 1 unter die radialen Haltestege 55 des Ventils 50 in die Aufnahmebereiche 51 für die Nasen 25 greifen. Mit einer einfachen Steck-DrehBewegung wird also eine feste (aber lösbare) Verbindung von Schalldämpfer 1 und Ventil 50 hergestellt.

Da wie bereits erwähnt sitzt der Schalldämpfer 1 dann passgenau auf der Hülse 52 des Ventils 50 auf und ist dabei zusätzlich durch die ebenfalls bereits erwähnte Ringdichtung 11 am Schalldämpfer 1 auf der Hülse 52 abgedichtet, wodurch dann gewährleistet wird, dass die Luft nur durch den Luftführungskanal 5 des Schalldämpfers 1 entweicht.

Der Betätiger 6 des Schalldämpfers 1 befindet sich, ohne dass eine äußere Kraft auf den Betätiger 6, bzw. den Knopf 10 des Betätigers 6 einwirkt, in einer Ausgangsstellung, in der sich das Druckstück 9 des Betätigers 6 in einem maximal in Richtung Käfigteil 2 des Schalldämpfers 1 weisenden Bereich befindet. In dieser Position des Betätigers 6 liegt dieser nur leicht am Druckknopf 63 des Ventils 50 an bzw. auf, so dass das Ventil 50 in der Verschlussstellung VS (welche ja auch die Ruhestellung bzw. Ausgangsstellung des Ventils 50 ist) verbleibt.

Figur 9 zeigt einen Längsschnitt ähnlich wie in Figur 8, jedoch in einer zu Figur 8 verdrehten Schnittebene, wobei sich das Ventil 50 aber in einer Öffnungsstellung OS befindet.

Um das Ventil 50 in diese Öffnungsstellung OS zu verbringen, wird der Betätiger 6 manuell in vertikaler Richtung bewegt - also in Figur 9 niedergedrückt -, sodass das Druckstück 9 innerhalb des Kopplungsstücks 3 des Schalldämpfers 1 in Richtung Bajonettanschlussstück 3 des Schalldämpfers 1 verschoben wird.

In dieser Position drückt das Druckstück 9 des Betätigers 6 auf den Druckknopf 63 des beweglichen Verschlusselements 60 des Ventils 50. Dadurch wirkt eine Kraft entgegen dem Innendruck im iSUP Board (und natürlich auch auf die Feder 70, welche daraufhin gestaucht wird). Ist die von dem Betätiger 6 ausgehende Kraft (und somit die Kraft die auf das bewegliche Verschlusselement 60 des Ventils 50 wirkt) größer als die Kraft die durch die unter Überdruck stehende Luft in im Innenraum 81 des iSUP Boards 80 auf den Ventilteller 61 einwirkt, sowie die zur Stauchung der Feder 70 benötigte Kraft, so wird das bewegliche Verschlusselement 60 von dem Bereich des Ventilsitzes 56 weggedrückt, das Ventil 50 öffnet sich und befindet sich in der Öffnungsstellung OS.

Die Luft (dargestellt durch dicke Pfeile) aus dem Innenraum 81 des iSUP Boards 80 entweicht so über einen innerhalb der Zylinderinnwand 52a der Hülse 52 angeordneten Bereich am kreuzförmig ausgebildeten Druckstück 9 vorbei in den Luftführungskanal 5 des Schalldämpfers 1. Aus dem Luftführungskanal 5 entweicht die Luft dann über das aus porösem Material hergestellte Schalldämpferelement 4 durch Durchbrüche 23 des Käfigteils 22 nach außen in die Atmosphäre.

Der in den Figuren 5 bis 9 beschriebene Schalldämpfer 1 erlaubt ein besonders effizientes Ablassen der Luft aus dem iSUP Board 80, ohne dass die Zeitdauer, die für das Ablassen der Luft benötigt wird, signifikant verlängert wird.

Es wird abschließend noch einmal darauf hingewiesen, dass es sich bei dem vorhergehend detailliert beschriebenen Schalldämpfer lediglich ein Ausführungsbeispiel handelt, welches vom Fachmann in verschiedenster Weise modifiziert werden kann, ohne den Bereich der Erfindung zu verlassen. So sind beispielsweise das gezeigte Gehäuse, mit Schalldämpferelement und Betätiger in auf vielfältige Weise gestaltbar und die genannten Vorrichtungen sind untereinander beliebig austauschbar und/oder kombinierbar. Alternativ oder zusätzlich müsste der Schalldämpfer gar kein Gehäuse ausbilden oder nur ein sehr primitives Gehäuse ausbilden. Weiterhin schließt die Verwendung der unbestimmten Artikel "ein" bzw. "eine" nicht aus, dass die betreffenden Merkmale auch mehrfach vorhanden sein können.

### Bezugszeichenliste

1 Schalldämpfer
3 Kopplungsstück / Bajonettanschlussstück
4 Schalldämpferelement
4a Durchbruch im Schalldämpferelement
5 Luftführungskanal
6 Betätiger
7 Betätigungsbolzen
8 Bolzenkopf
9 Druckstück
9a Nut im Druckstück
9b Durchbruch im Druckstück
10 Knopf
11 Ringdichtung
12 Nut in der Ringdichtung
20 Gehäuse
20r Rastnasen des Gehäuses
21 Deckel
21a Durchbruch im Deckel
21r Rastnasen im Deckel
22 Käfigteil
23 Durchbruch im Käfigteil
24 Sprossen des Käfigteils
25 Bajonettanschlussstück / Nase
26 Längsschlitz (Bajonettkupplung)
27 Querschlitz (Bajonettkupplung)
28 Griffrille
50 Ventil
51 Aufnahmebereich für Bajonettanschlussstück
52 Hülse
52a Zylinderinnenwand der Hülse
52b Zylinderaußenwand der Hülse
53 Nut zwischen Zylinderinnenwand und Zylinderaußenwand der Hülse
54 Ventilrand
54v umlaufende Vorsprünge an der Unterseite des Ventilrandes
55 radiale Haltestege
56 Ventilsitz
57 O-Ring
58 Lager
59 radiale Verbindungsstege zwischen Zylinderinnenwand und Zylinderaußenwand der Hülse
60 bewegliches Verschlusselement
61 Ventilteller
61a äußerer Bereich des Ventiltellers
62 Ventilstift
63 Druckknopf
64 (Ring-)Dichtung am Ventilteller
65 Abströmbereich des Ventils
66 Ventilkörper
67 Schraubvorrichtung für Einschraubteil
68 Einströmöffnung
70 Feder
80 iSUP Board
81 Innenraum des iSUP Boards
82 flexible Wand des iSUP Boards
83 Einschraubsteil
83k umlaufende Kanten des Einschraubteils
VS Verschlussstellung
OS Öffnungsstellung
VA Ventilachse
DA Dämpferachse

## Patentansprüche

1. Schalldämpfer (1) zum geräuschreduzierten Ablassen eines gasförmigen Mediums aus einem Ventil (50) eines unter Überdruck stehenden aufblasbaren Wassersportgeräts (80), vorzugsweise eines aufblasbaren Stand Up Paddle Boards (80),
**dadurch gekennzeichnet**, 1f
dass der Schalldämpfer (1) dazu ausgebildet ist, um mit seiner Hilfe das Ventil (50) des Wassersportgeräts (80) zu öffnen und dabei ein sich unter einem Überdruck befindliches gasförmiges Medium geräuschreduziert aus einem Innenraum des Wassersportgeräts (80) abzulassen.

2. Schalldämpfer nach Anspruch 1, wobei der Schalldämpfer (1) eine Ankopplungsvorrichtung (3), vorzugsweise eine Schnell-Ankopplungsvorrichtung (3), umfasst, um den Schalldämpfer (1) reversibel an das Ventil (50) des Wassersportgeräts (80) zu koppeln.

3. Schalldämpfer nach einem der vorstehenden Ansprüche, wobei der Schalldämpfer (1) ausgebildet ist, das gasförmige Medium unter einem Überdruck von mindestens 0,25 bar, bevorzugt mindestens 0,5 bar, weiter bevorzugt mindestens 0,75 bar und besonders bevorzugt mindestens 1,0 bar geräuschreduziert aus dem Ventil (50) des Wassersportgeräts (80) abzulassen.

4. Schalldämpfer nach einem der vorstehenden Ansprüche, wobei der Schalldämpfer (1) ausgebildet ist, den Schalldruck, der beim Ablassen des gasförmigen Mediums aus dem Ventil (50) des Wassersportgeräts (80) entsteht, um mindestens 20 dB zu senken.

5. Schalldämpfer nach einem der vorstehenden Ansprüche 2 bis 4, wobei die Ankopplungsvorrichtung (3) ein Bajonettanschlussstück (3) umfasst, bevorzugt ein Bajonettanschlussstück (3) zum Ankoppeln an ein Halkey-Roberts-Ventil^{®} (50) für Wassersportgeräte (80).

6. Schalldämpfer nach einem der vorstehenden Ansprüche, umfassend einen, vorzugsweise durch den Schalldämpfer (1) verlaufenden, Betätiger (6), um in einem Betriebszustand, in dem der Schalldämpfer (1) mit dem Ventil (50) gekoppelt ist, ein bewegliches Verschlusselement (60) in dem Ventil (50) zu betätigen, um das Ventil (50) in eine Öffnungsstellung (OS) zu verbringen.

7. Schalldämpfer nach einem der vorstehenden Ansprüche, umfassend ein Schalldämpferelement (4), welches in einem Abströmbereich (65) des im Betrieb aus dem Ventil (50) abströmenden gasförmigen Mediums angeordnet ist.

8. Schalldämpfer nach Anspruch 7, wobei das Schalldämpferelement (4) im Wesentlichen ein poröses Material umfasst, insbesondere einen porösen Kunststoff und/oder geeignete Papier- und/oder Naturfasern, besonders bevorzugt ein poröses Polyethylen.

9. Schalldämpfer nach einem der Ansprüche 7 bis 8, umfassend ein vorzugsweise zylindrisches Gehäuse (20), um im Gehäuse (20) zumindest das Schalldämpferelement (4) und vorzugsweise den Betätiger (6) zumindest teilweise aufzunehmen, wobei das Gehäuse (20) vorzugsweise das Kopplungsstück (3) zur Ankopplung an das Ventil (50) und einen sich daran anschließenden Käfigteil (22) zur Aufnahme des Schalldämpferelements (4) aufweist.

10. Schalldämpfer nach einem der vorstehenden Ansprüche, umfassend eine Dichtung (11), um den Schalldämpfer (1) dicht an das Ventil (50) anzukoppeln.

11. Verfahren zum geräuschreduzierten Ablassen von einem gasförmigen Medium aus einem unter Überdruck stehenden aufblasbaren Wassersportgerät (80), wobei ein Schalldämpfer (1) an einem Ventil (50) des unter Überdruck stehenden aufblasbaren Wassersportgeräts (80) angeordnet, vorzugsweise mit dem Ventil (50) gekoppelt, wird
**dadurch gekennzeichnet**, 1f
dass das gasförmige Medium aus dem Ventil (50) durch den Schalldämpfer (1) nach außen abgelassen wird, wobei vorzugsweise mittels eines Mechanismus am oder in dem mit dem Ventil (50) gekoppelten Schalldämpfer (1) das Ventil (50) geöffnet wird.

12. Verwendung eines Schalldämpfers (1) gemäß einem der Ansprüche 1 bis 10 zum schallgedämpften Ablassen eines gasförmigen Mediums aus einem Ventil (50) eines unter Überdruck stehenden aufblasbaren Wassersportgeräts (80).

13. Set umfassend zumindest ein Wassersportgerät (80), vorzugsweise ein aufblasbares Stand Up Paddle Board (80), und einen Schalldämpfer (1) gemäß einem der Ansprüche 1 bis 10.

## Claims

1. Silencer (1) for the noise-reduced release of a gaseous medium from a valve (50) of an inflatable water sports device (80) under overpressure, preferably an inflatable stand-up paddle board (80), **characterized in that** the silencer (1) is designed to open the valve (50) of the water sports device (80) with its aid and thereby release a gaseous medium under overpressure from the interior of the water sports device (80) in a noise-reduced manner.

2. Silencer according to claim 1, wherein the silencer (1) comprises a coupling device (3), preferably a quick coupling device (3), to reversibly couple the silencer (1) to the valve (50) of the water sports device (80).

3. Silencer according to one of the preceding claims, wherein the silencer (1) is designed to release the gaseous medium under an overpressure of at least 0.25 bar, preferably at least 0.5 bar, more preferably at least 0.75 bar, and particularly preferably at least 1.0 bar from the valve (50) of the water sports device (80) in a noise-reduced manner.

4. Silencer according to one of the preceding claims, wherein the silencer (1) is designed to reduce the sound pressure generated when the gaseous medium is released from the valve (50) of the water sports device (80) by at least 20 dB.

5. Silencer according to one of the preceding claims 2 to 4, wherein the coupling device (3) comprises a bayonet fitting (3), preferably a bayonet fitting (3) for coupling to a Halkey-Roberts^{®} valve (50) for water sports devices (80).

6. Silencer according to one of the preceding claims, comprising an actuator (6), preferably extending through the silencer (1), to actuate a movable closure element (60) in the valve (50) when the silencer (1) is coupled to the valve (50), to bring the valve (50) into an open position (OS).

7. Silencer according to one of the preceding claims, comprising a silencer element (4), which is arranged in an outflow area (65) of the gaseous medium flowing out of the valve (50) during operation.

8. Silencer according to claim 7, wherein the silencer element (4) essentially comprises a porous material, in particular a porous plastic and/or suitable paper and/or natural fibers, particularly preferably a porous polyethylene.

9. Silencer according to one of the claims 7 to 8, comprising a preferably cylindrical housing (20) to accommodate at least the silencer element (4) and preferably the actuator (6) at least partially within the housing (20), wherein the housing (20) preferably comprises the coupling piece (3) for coupling to the valve (50) and a subsequent cage part (22) to accommodate the silencer element (4).

10. Silencer according to one of the preceding claims, comprising a seal (11) to seal the silencer (1) to the valve (50).

11. Method for the noise-reduced release of a gaseous medium from an inflatable water sports device (80) under overpressure, wherein a silencer (1) is arranged on a valve (50) of the inflatable water sports device (80) under overpressure, preferably coupled to the valve (50), **characterized in that** the gaseous medium is released from the valve (50) to the outside through the silencer (1), wherein preferably by means of a mechanism on or in the silencer (1) coupled to the valve (50), the valve (50) is opened.

12. Use of a silencer (1) according to one of the claims 1 to 10 for the noise-damped release of a gaseous medium from a valve (50) of an inflatable water sports device (80) under overpressure.

13. Set comprising at least one water sports device (80), preferably an inflatable stand-up paddle board (80), and a silencer (1) according to one of the claims 1 to 10.

## Revendications

1. Silencieux (1) pour l'évacuation réduite en bruit d'un milieu gazeux d'une valve (50) d'un dispositif de sport nautique gonflable (80) sous pression, de préférence une planche de stand up paddle gonflable (80), **caractérisé en ce que** le silencieux (1) est conçu pour ouvrir la valve (50) du dispositif de sport nautique (80) avec son aide et ainsi évacuer un milieu gazeux sous pression de l'intérieur du dispositif de sport nautique (80) de manière réduite en bruit.

2. Silencieux selon la revendication 1, dans lequel le silencieux (1) comprend un dispositif de couplage (3), de préférence un dispositif de couplage rapide (3), pour coupler de manière réversible le silencieux (1) à la valve (50) du dispositif de sport nautique (80).

3. Silencieux selon l'une des revendications précédentes, dans lequel le silencieux (1) est conçu pour évacuer le milieu gazeux sous une pression d'au moins 0,25 bar, de préférence d'au moins 0,5 bar, plus préférablement d'au moins 0,75 bar, et particulièrement préférablement d'au moins 1,0 bar de la valve (50) du dispositif de sport nautique (80) de manière réduite en bruit.

4. Silencieux selon l'une des revendications précédentes, dans lequel le silencieux (1) est conçu pour réduire la pression acoustique générée lors de l'évacuation du milieu gazeux de la valve (50) du dispositif de sport nautique (80) d'au moins 20 dB.

5. Silencieux selon l'une des revendications 2 à 4, dans lequel le dispositif de couplage (3) comprend un raccord à baïonnette (3), de préférence un raccord à baïonnette (3) pour le couplage à une valve Halkey-Roberts^{®} (50) pour dispositifs de sport nautique (80).

6. Silencieux selon l'une des revendications précédentes, comprenant un actionneur (6), de préférence s'étendant à travers le silencieux (1), pour actionner un élément de fermeture mobile (60) dans la valve (50) lorsque le silencieux (1) est couplé à la valve (50), pour amener la valve (50) en position d'ouverture (OS).

7. Silencieux selon l'une des revendications précédentes, comprenant un élément de silencieux (4), qui est disposé dans une zone d'échappement (65) du milieu gazeux s'échappant de la valve (50) pendant le fonctionnement.

8. Silencieux selon la revendication 7, dans lequel l'élément de silencieux (4) comprend essentiellement un matériau poreux, en particulier un plastique poreux et/ou des fibres de papier et/ou naturelles appropriées, particulièrement de préférence un polyéthylène poreux.

9. Silencieux selon l'une des revendications 7 à 8, comprenant un boîtier de préférence cylindrique (20), pour accueillir au moins partiellement l'élément de silencieux (4) et de préférence l'actionneur (6) à l'intérieur du boîtier (20), dans lequel le boîtier (20) comprend de préférence la pièce de couplage (3) pour le couplage à la valve (50) et une partie de cage (22) subséquente pour accueillir l'élément de silencieux (4).

10. Silencieux selon l'une des revendications précédentes, comprenant un joint (11), pour sceller le silencieux (1) à la valve (50).

11. Procédé pour l'évacuation réduite en bruit d'un milieu gazeux d'un dispositif de sport nautique gonflable (80) sous pression, dans lequel un silencieux (1) est disposé sur une valve (50) du dispositif de sport nautique gonflable (80) sous pression, de préférence couplé à la valve (50), **caractérisé en ce que** le milieu gazeux est évacué de la valve (50) vers l'extérieur à travers le silencieux (1), de préférence au moyen d'un mécanisme sur ou dans le silencieux (1) couplé à la valve (50), la valve (50) est ouverte.

12. Utilisation d'un silencieux (1) selon l'une des revendications 1 à 10 pour l'évacuation réduite en bruit d'un milieu gazeux d'une valve (50) d'un dispositif de sport nautique gonflable (80) sous pression.

13. Ensemble comprenant au moins un dispositif de sport nautique (80), de préférence une planche de stand up paddle gonflable (80), et un silencieux (1) selon l'une des revendications 1 à 10.
